# FASCICULE DE BREVET EUROPEEN

(11) **EP 1 765 615 B1**
(45) Date de publication et mention de la délivrance du brevet: **15.08.2012**
(21) Numéro de dépôt: 05753061.0
(22) Date de dépôt: 20.06.2005
(51) Int. Cl.: B60G 7/00, B60G 3/00, B62D 17/00

(54) **DISPOSITIF DE SUSPENSION POUR VEHICULE AUTOMOBILE**
KRAFTFAHRZEUGFEDERUNGSVORRICHTUNG
MOTOR VEHICLE SUSPENSION DEVICE

(30) Priorité: 02.07.2004 FR 0407409
(43) Date de publication de la demande: 28.03.2007
(73) Titulaire: Compagnie Générale des Etablissements Michelin, 63040 Clermont-Ferrand Cedex 09 (FR); Michelin Recherche et Technique S.A., 1763 Granges-Paccot (CH)
(72) Inventeur: DEAL, Michel, F-03110 Saint Rémy en Rollat (FR); VAXELAIRE, Alain, F-63540 Romagnat (FR); VERNIER, Davy, F-63000 Clermont-Ferrand (FR)
(74) Mandataire: Lasson, Cédric Y. M.
(86) Numéro de dépôt international: PCT/EP2005/006633
(87) Numéro de publication internationale: WO 2006/002795

(56) Documents cités:
- WO-A-01/72572
- WO-A-2004/058521

## Description

La présente invention concerne la liaison au sol des véhicules automobiles, en particulier les dispositifs de suspension et de support de roue permettant un degré de liberté de carrossage de la roue par rapport aux éléments de suspension. Le terme "liaison au sol" recouvre tous les éléments et fonctions présents, actifs ou influant dans la relation entre la caisse du véhicule et le sol sur lequel celui-ci se déplace. Font donc partie de la liaison au sol notamment les éléments suivants: pneumatique, roue, roulement de roue, porte-roue, organes de freinage, éléments de suspension (bras, triangles, jambe de force, etc...), ressorts, amortisseurs, articulations, pièces anti-vibratoires, systèmes anti-roulis, anti-blocage, anti-patinage, système de direction, de contrôle de trajectoire.

L'invention concerne les véhicules de tourisme (passenger cars) et les véhicules de compétition automobile.

La demande internationale WO 01/72572 décrit un dispositif de support de roue permettant un degré de liberté de carrossage de la roue par rapport aux éléments de suspension. Ce degré de liberté est contrôlé soit de manière active, par exemple par un vérin en fonction de paramètres de roulage du véhicule, soit de manière passive par les efforts qui s'exercent sur la roue dans l'aire de contact.

La demande de brevet européen EP 1247663 concerne également de tels dispositifs et propose d'utiliser, pour guider le mouvement de carrossage de la roue, un élément pivotant selon un axe sensiblement vertical articulé entre le porte-roue et les éléments de suspension.

La demande de brevet européen EP 1275534 concerne également de tels dispositifs et propose de mettre en oeuvre une glissière courbe pour guider le mouvement de carrossage du porte-roue par rapport aux éléments de suspension.

L'une des difficultés que l'on rencontre dans la conception de ces systèmes vient du fait que des efforts importants doivent être transmis de la chaussée à la caisse (et vice-versa) à travers la liaison au sol et en particulier le pneumatique, le porte-roue et la suspension. Ces efforts engendrent des contraintes mécaniques importantes avec toutes les conséquences qui s'en suivent sur la précision du guidage de la roue et sur la fiabilité des systèmes. Vu depuis la caisse du véhicule, les efforts transmis par la chaussée sont généralement détaillés de la manière suivante: un effort transversal (horizontal et orthogonal au plan de roue), un effort longitudinal (horizontal et parallèle au plan de roue), un effort vertical, un couple dit "d'enroulement" (autour de l'axe de la roue), un couple dit "de renversement" (autour de l'axe longitudinal) et un couple dit "d'auto-alignement" (autour de l'axe vertical). En plus de ces efforts transmis par la chaussée, la roue transmet à la caisse des efforts issus des forces d'inertie qu'elle subit, en particulier la force centrifuge qui agit dans les courbes.

Dans les dispositifs de support et de suspension décrits dans les demandes de brevets citées plus haut, on a ajouté, par rapport à des dispositifs de suspension conventionnels, un degré de liberté afin de permettre le carrossage de la roue par rapport à la caisse. Cette mobilité supplémentaire peut être réalisée de plusieurs manières différentes mais il est constant que le fait d'augmenter le nombre de pièces et le nombre d'articulations ou de pivots à tendance à dégrader la rigidité et/ou la robustesse du système complet. De plus, il est difficile de compenser ce déficit de rigidité en augmentant les sections des différents éléments car le volume disponible est généralement limité. En effet, de telles suspensions à carrossage variable doivent de préférence ne pas remettre en cause les compromis établis dans le domaine de l'encombrement (on emploie aussi le terme "packaging").

Un problème de ces systèmes est donc leur rigidité perfectible, en particulier vis à vis de l'effort longitudinal, du couple d'auto-alignement et du couple d'enroulement.

Dans la demande WO 01/72572, il est proposé, pour les systèmes passifs, que le centre instantané de rotation du mouvement de carrossage de la roue par rapport aux éléments de suspension soit situé sous le plan du sol afin que les efforts transversaux qui agissent dans l'aire de contact génèrent un couple tendant à incliner le plan de la roue dans le sens souhaité (ce centre instantané de rotation est désigné "premier centre instantané de rotation" dans le document WO 01/72572). Cependant, bien que les efforts transversaux génèrent, sous cette condition, un couple suivant l'axe de carrossage qui tend à incliner la roue dans le sens souhaité, l'efficacité en terme de variation de carrossage est très différente selon les configurations mises en oeuvre. Pourtant dans la pratique, la sensibilité du carrossage aux efforts dans l'aire de contact est un critère important. En effet, on recherche généralement à concevoir un système de support de roue et de suspension tel que la variation passive de carrossage soit prévisible, stable et satisfaisante en termes d'inclinaison maximale. Ceci est particulièrement important pour les véhicules très performants. Pour ces véhicules, la recherche de la meilleure performance passe par une optimisation de l'adhérence longitudinale et transversale. Cette optimisation n'est possible que si l'angle de carrossage de la roue est à tout moment proche de l'idéal pour le fonctionnement du pneumatique. Un carrossage idéal en matière d'adhérence du pneumatique est un carrossage permettant d'optimiser l'homogénéité de la répartition de pression dans l'aire de contact, c'est à dire permettant par exemple de compenser l'effet, sur la répartition de pression dans l'aire de contact, qu'ont les déformations latérales du pneumatique lorsqu'il est en dérive (typiquement au cours d'un virage).

Un objectif de l'invention est de proposer un système dont le fonctionnement soit de préférence essentiellement passif et qui permette de pallier au moins certains des inconvénients précités.

Cet objectif est atteint par un dispositif de support destiné à lier une roue à des éléments de suspension d'un véhicule automobile, ledit dispositif de support comportant des moyens de carrossage conférant au porte-roue un degré de liberté de carrossage par rapport aux dits éléments de suspension, les dits moyens de carrossage comprenant une triple charnière, ladite triple charnière comprenant trois axes sensiblement longitudinaux, ladite triple charnière étant liée d'une part au porte-roue et d'autre part aux éléments de suspension, ladite triple charnière comprenant deux joues et deux leviers, chacun des leviers étant respectivement solidaire de l'une des deux joues, les leviers étant liés d'une part au porte-roue et d'autre part aux éléments de suspension, le mouvement de carrossage du porte-roue s'effectuant autour d'un centre instantané de rotation, une distance latérale "dl" séparant la position transversale du centre instantané de rotation (CIR r/s) de la position transversale de la base de roue, ledit dispositif étant configuré en outre de manière à ce que ladite distance (dl) demeure inférieure 40 mm au cours d'un débattement de carrossage de 0° à -3°.

De préférence, le dispositif de support est configuré en outre de manière à ce que ladite distance (dl) demeure inférieure à 40 mm au cours d'un débattement de carrossage de 0° à -4°, de préférence -5°, de préférence -6°, de préférence -7°, de préférence -8°, de préférence sur l'ensemble du débattement de carrossage négatif utile.

De préférence, le dispositif de support est configuré en outre de manière à ce que ladite distance (dl) demeure inférieure à 20 mm, de préférence 10 mm.

De préférence, le dispositif de support est configuré en outre de manière à ce que ladite distance (dl) demeure inférieure à 40 mm, de préférence 20 mm, de préférence 10 mm au cours d'un débattement de carrossage de 0° à +1°, de préférence +2°, de préférence +3°, de préférence +4°, de préférence +5°, de préférence +6°, de préférence +7°, de préférence +8°, de préférence sur l'ensemble du débattement de carrossage positif utile.

De préférence, le centre instantané de rotation étant situé sous le sol et à une distance verticale du sol, le dispositif de support est configuré en outre de manière à ce que la distance verticale correspondant au débattement de carrossage positif maximal soit supérieure à la distance verticale correspondant à un carrossage nul, de préférence supérieure à 1.5 fois la distance verticale correspondant à un carrossage nul, de préférence 2.5 fois.

De préférence, le dispositif de support comprend en outre un amortisseur de carrossage agissant entre le porte-roue et le support intermédiaire.

L'invention concerne également un dispositif de suspension d'un essieu comprenant pour chacune des deux roues dudit essieu un dispositif de support tel que décrit ci-dessus.

De préférence, ce dispositif de suspension comprend en outre des moyens de liaison en carrossage permettant de lier le mouvement de carrossage des deux roues.

De préférence encore, les moyens de liaison en carrossage utilisent une liaison entre deux vérins agissant entre le porte-roue et le support intermédiaire de chaque roue de l'essieu. Alternativement, les moyens de liaison en-carrossage comprennent des liens mécaniques agissant entre les portes-roues de chaque roue de l'essieu.

De préférence, le dispositif de suspension comprend en outre au moins un bras supérieur et un bras inférieur, le bras inférieur étant relié directement à la joue intérieure de la triple charnière et le bras supérieur étant relié directement au levier solidaire de la joue extérieure de la triple charnière.

L'invention concerne également un véhicule automobile comprenant ledit dispositif de suspension.

L'invention sera mieux comprise grâce à la description des figures qui représentent respectivement:
Figure 1: vue schématique plane d'un véhicule selon l'invention.
Figure 2: vue en perspective d'un mode de réalisation de la triple charnière du dispositif de l'invention.
Figure 3 et 4: vues schématiques planes du système de suspension du véhicule de la figure 1.
Figure 5: graphe donnant la distance latérale en fonction de l'angle de carrossage.
Figure 6: graphe donnant la distance verticale en fonction de l'angle de carrossage.
Figure 7: vue schématique plane d'un mode de réalisation du véhicule selon l'invention.
Figures 8 et 9: vues en perspective d'un mode de réalisation de l'invention utilisant une jambe de force MacPherson.
Figures 10 et 11: vues en perspective d'un autre mode de réalisation de l'invention.
Figure 12: vue en perspective d'un autre mode de réalisation du dispositif de suspension de l'invention.
Figures 13 et 14: vues en perspective d'un autre mode de réalisation de l'invention.

Sur les différentes figures, les éléments identiques ou similaires portent les mêmes numéros de références. Leur description n'est donc pas reprise systématiquement.

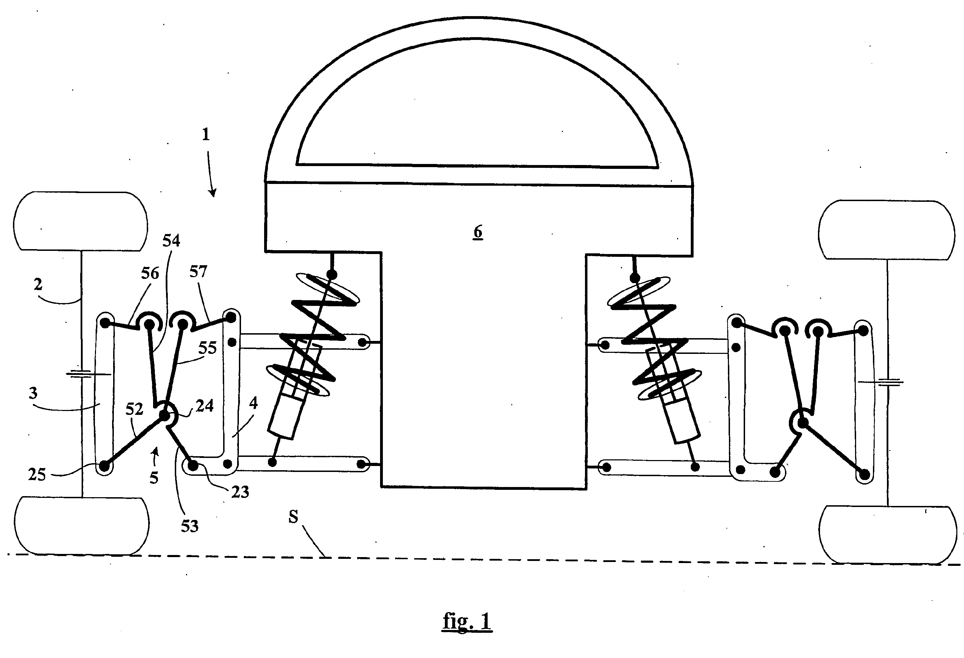

La figure 1 représente schématiquement un véhicule selon l'invention. La description qui va suivre se concentre sur la partie gauche de la figure. Le dispositif de suspension 1 comprend un dispositif de support de roue permettant des variations de carrossage de la roue 2 par rapport à un support intermédiaire 4. Le support intermédiaire 4 est lié aux autres éléments de suspension (bras, triangles, ressorts) de manière connue- en- soi afin de permettre des mouvement de suspension sensiblement verticaux. Selon l'invention, le porte-roue 3 est lié au support intermédiaire 4 par l'intermédiaire de moyens de carrossage assurant deux fonctions sensiblement indépendantes. La première de ces fonctions est une liaison autorisant un mouvement plan et matérialisée par une "triple charnière" 5. La triple charnière 5 est articulée selon trois axes: un axe intérieur 23 reliant une joue intérieure 53 au support intermédiaire 4, un axe extérieur 25 reliant une joue extérieure 52 au porte-roue 3 et un axe central 24 reliant les joues intérieure 53 et extérieure 52 entre elles. Ces axes sont sensiblement longitudinaux c'est-à-dire sensiblement horizontaux et parallèles au plan de la roue 2. Cette liaison autorise des mouvements du porte-roue 3 par rapport au support intermédiaire 4 dans le plan de carrossage tout en bloquant efficacement toute rotation relative autour de l'axe vertical et de l'axe transversal. La seconde fonction qui est celle du guidage du porte-roue au cours de son mouvement dans le plan de carrossage est réalisée par l'intermédiaire de leviers 54 et 55 solidaires respectivement des joues 53 et 52 de la triple charnière 5. Des biellettes 56 et 57 relient les extrémités supérieures des leviers 54 et 55 d'une part au porte-roue et d'autre part au support intermédiaire 4. On voit sur cette figure que la triple charnière 5 et ses leviers 54 et 55 se comportent à la manière d'une paire de ciseaux qui serait intercalée entre le porte-roue et les éléments de suspension. C'est la configuration de cette paire de ciseaux qui détermine la cinématique du porte-roue 3 (et de la roue 2) par rapport au support intermédiaire 4 dans le plan de carrossage.

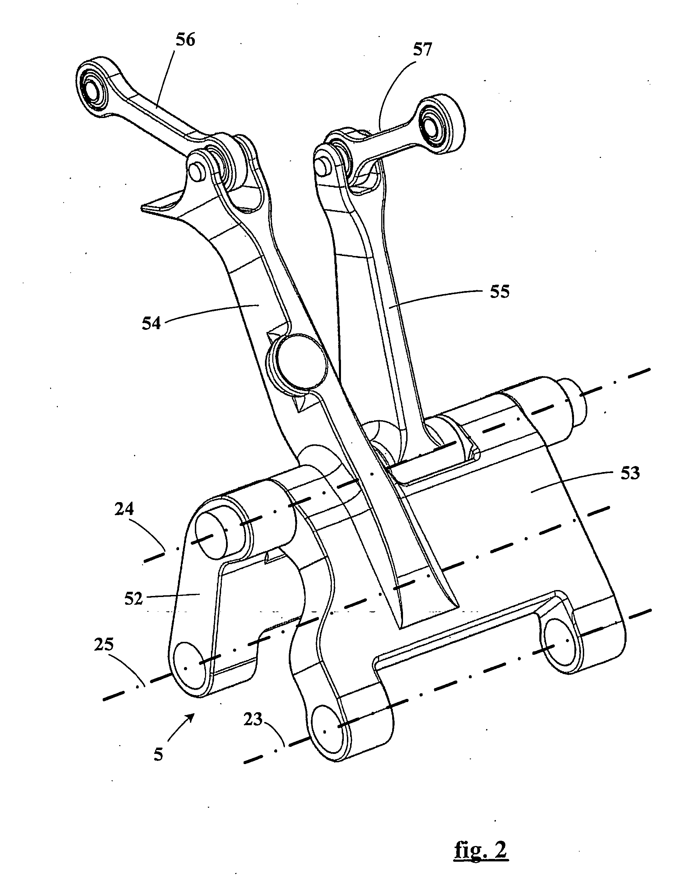

La figure 2 représente d'un mode de réalisation préféré des moyens de carrossage selon l'invention. On y voit une triple charnière 5, des leviers 54 et 55 et des biellettes 56 et 57 selon le principe décrit à la figure 1. Le porte-roue et le support intermédiaire ne sont pas représentés. Sur cette figure, on voit bien l'effet des joues 52 et 53 de la triple charnière 5 en termes de rigidité. Au contraire, les leviers 54 et 55 solidaires respectivement des joues 52 et 53 de la triple charnière 5, n'ayant qu'une fonction de guidage des mouvements dans le plan de carrossage, n'ont pas à supporter des sollicitations mécaniques très importantes. Les leviers 54 et 55 sont de préférence décalés l'un par rapport à l'autre afin de pouvoir se croiser le cas échéant.

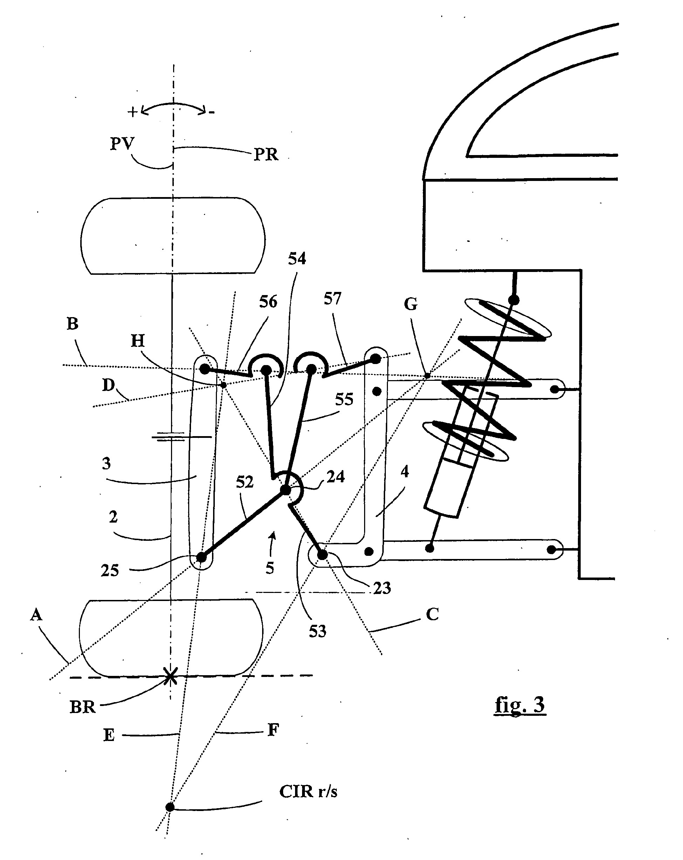

La figure 3 reprend la partie gauche de la figure 1 afin de détailler d'autres caractéristiques de l'invention. Sur cette figure, la roue 2 est représentée dans une position de carrossage nul. On peut déterminer de manière graphique la position, dans le plan de carrossage, du centre instantané de rotation (CIR r/s) de la roue 2 (et du porte-roue 3) par rapport au support intermédiaire 4 de la manière suivante: on détermine d'une part l'intersection (G) de la droite A correspondant à l'orientation de la joue extérieure 52 de la triple charnière 5 avec la droite B correspondant à l'orientation de la biellette extérieure 56; on détermine d'autre part l'intersection (H) de la droite C correspondant à l'orientation de la joue intérieure 53 de la triple charnière 5 avec la droite D correspondant à l'orientation de la biellette intérieure 57; on construit ensuite la droite E qui joint le point H et le pivot (l'axe extérieur 25) de la joue extérieure 52 sur le porte-roue 3; on construit ensuite la droite F qui joint le point G et le pivot (l'axe intérieur 23) de la joue intérieure 53 sur le support intermédiaire 4; le centre instantané de rotation (CIR r/s) du mouvement de carrossage du porte-roue 3 par rapport au support intermédiaire 4 se trouve alors à l'intersection des droites E et F. On comprend que la position du centre instantané de rotation est la conséquence de la combinaison des caractéristiques géométriques et des positions des nombreuses pièces du dispositif. Sur cet exemple particulier et dans la position verticale de la roue représentée, le centre instantané de rotation se trouve sous le sol. De plus, dans la position de carrossage nul, le centre instantané de rotation est situé sensiblement dans le plan de roue (PR) ce qui constitue un mode de réalisation préféré de l'invention.

Le plan de roue (PR) est le plan lié à la roue, perpendiculaire à l'axe de la roue et passant par le centre de l'aire de contact au sol lorsque la roue a un carrossage nul. Lorsque la roue s'incline, le plan de roue s'incline également et peut alors ne plus passer par le centre de l'aire de contact. C'est par exemple le cas lorsque le pneumatique est déformé par les efforts transversaux qu'il subit dans un virage.

On appelle "base de roue" l'intersection (BR) du plan de roue (PR) avec le sol (S).

De manière conventionnelle dans le domaine automobile, l'angle de carrossage de la roue est positif lorsque la roue s'incline vers l'extérieur du véhicule et négatif lorsque la roue s'incline vers l'intérieur du véhicule. La référence est donc le plan vertical (PV), longitudinal par rapport au véhicule.

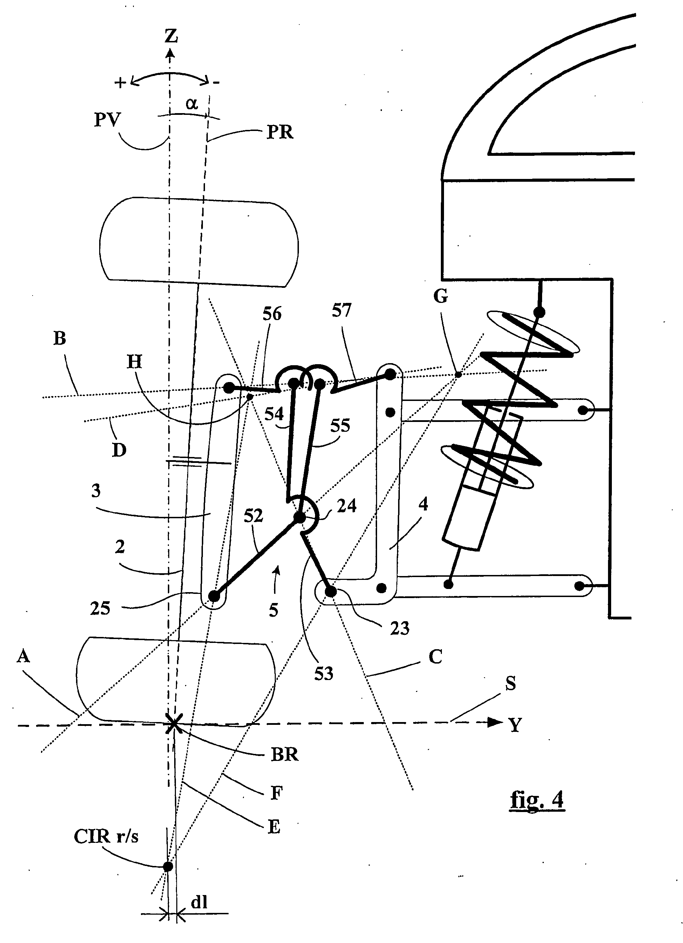

La figure 4 est similaire à la figure 3 mais représente le système dans une position de carrossage négatif. Le plan de roue PR est incliné de quelques degrés (α) vers l'intérieur. On voit également que les positions des joues et des leviers de la triple charnière ainsi que celles des biellettes ont changé par rapport à la figure 3. Une construction graphique équivalente à celle décrite plus haut permet de déterminer la position du centre instantané de rotation (CIR r/s). On constate que cette position a peu varié sur cet exemple. La base de roue BR s'est légèrement déplacée, ici vers l'intérieur du véhicule. Convenons d'appeler "la distance latérale" (dl) la distance qui sépare latéralement (ou transversalement) la position du centre instantané de rotation (CIR r/s) de la base de roue BR. Selon le repère (BR; Y; Z) représenté sur la figure, si Y_{CIR} est la position transversale du centre instantané de rotation (CIR r/s) et si Y_{BR} est de la position transversale de la base de roue (BR), la distance latéral (dl) est égale à la valeur absolue de la différence Y_{CIR} - Y_{BR}. Sur la figure, la distance latérale peut se visualiser comme la distance qui sépare le centre instantané de rotation de la verticale issue de la base de roue (BR).

Une caractéristique essentielle de l'invention concerne cette distance latérale. Selon l'invention, le dispositif de support doit être configuré de manière à ce que, au cours d'un débattement de carrossage de 0° à -3°, la distance latérale ne dépasse jamais 40 millimètres, de préférence 20 mm et de préférence encore 10 mm. Si le dispositif permet d'atteindre des angles de contre-carrossage plus importants (-4°, -5°, -6°, -7°, -8°, etc...), la même distance latérale maximale doit de préférence être également respectée sur l'ensemble du débattement de carrossage négatif utile.

Une caractéristique préférée du dispositif de support de l'invention concerne cette même distance latérale (dl) au cours d'un débattement de carrossage positif.

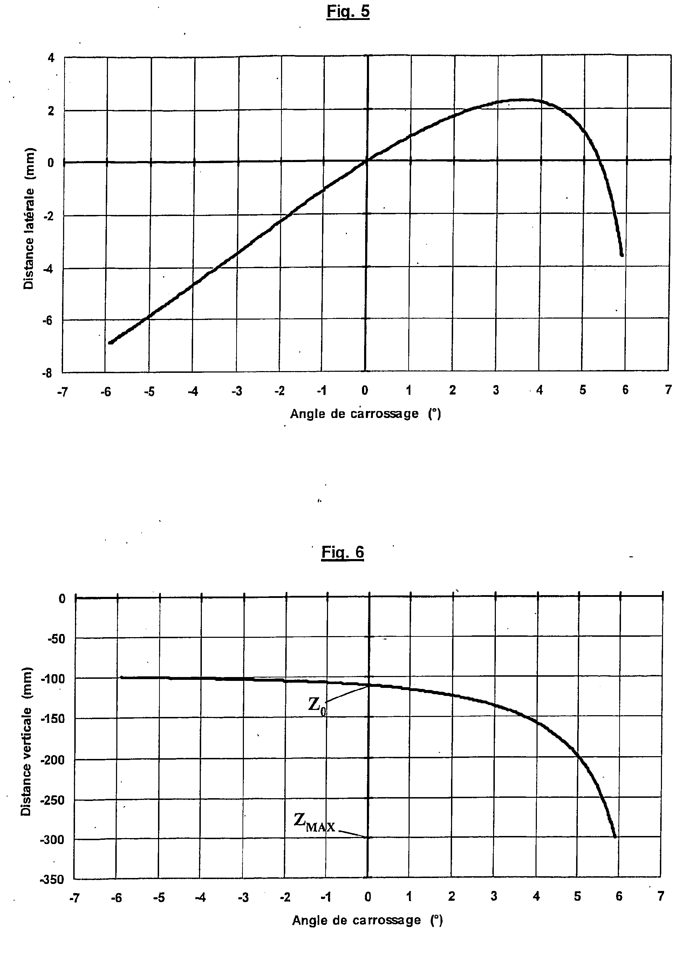

La figure 5 est un graphe montrant, pour un mode de réalisation préféré de l'invention, l'évolution de la distance latérale au cours d'un débattement de carrossage de pratiquement -6° à +6°. La distance latérale maximale atteinte pour un carrossage négatif est ici d'environ 7 mm pour un angle de -6°. Une valeur de distance négative signifie que le centre instantané de rotation se situe à l'extérieur de la base de roue (c'est également le cas représenté à la figure 4). La distance latérale maximale atteinte pour une carrossage positif est ici d'environ 2.5 mm pour un angle de +3.5°. On peut remarquer que la distance latérale est ici nulle pour un angle de carrossage nul.

Une caractéristique préférée du dispositif de support de l'invention concerne la position verticale du centre instantané de rotation par rapport au sol (S). Le centre instantané de rotation se situe de préférence, pour un carrossage nul, à une distance verticale (Z₀) sous le sol. De préférence, le dispositif est configuré en outre de manière à ce que la distance verticale (Z_{MAX}) correspondant au débattement de carrossage positif maximal soit supérieure à la distance verticale (Z₀) correspondant à un carrossage nul. De préférence encore, Z_{MAX} est supérieure à 1.5 fois Z₀ et de préférence encore supérieure à 2.5 fois Z₀.

La figure 6 est un graphe montrant, pour un mode de réalisation préféré de l'invention, l'évolution de la distance verticale au cours d'un débattement de carrossage de pratiquement -6° à +6°. Une valeur de distance négative signifie que le centre instantané de rotation se situe sous le sol. Sur cet exemple, Z₀ vaut environ 110 mm et Z_{MAX} vaut environ 300 mm (pour un carrossage maximal de près de +6°). Sur cet exemple, Z_{MAX} est donc supérieure à 2.5 fois Z₀.

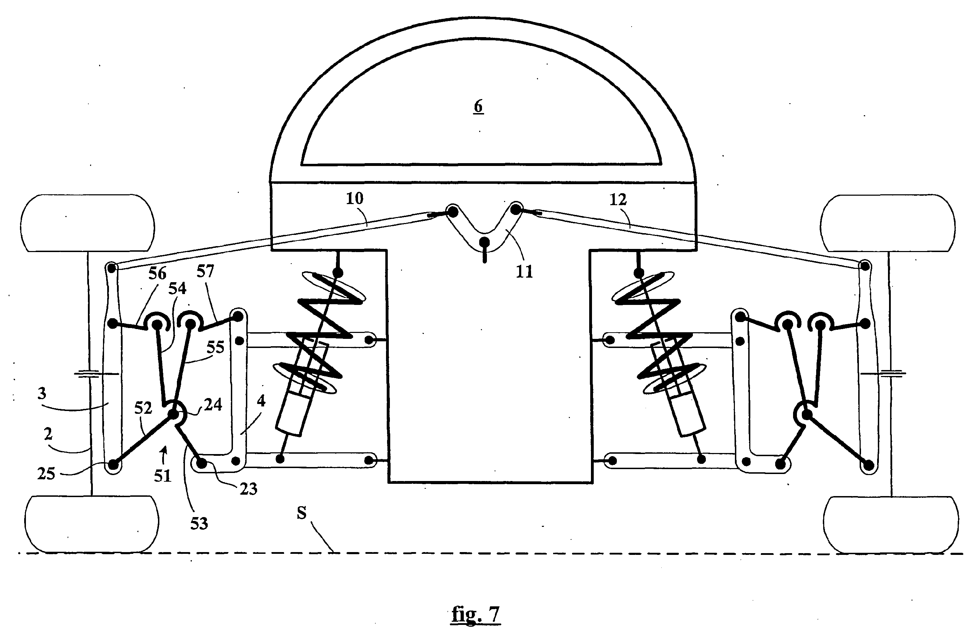

La figure 7 représente schématiquement un mode de réalisation de l'invention dans lequel des moyens de liaison en carrossage permettent de lier les mouvements de carrossage de la roue 2 avec ceux de la roue opposée. Les moyens de liaison peuvent prendre par exemple la forme représentée ici d'un poussoir 10 commandé par le porte-roue 3 et agissant par l'intermédiaire d'un basculeur 11 sur un poussoir opposé 12 lié au porte-roue de la roue opposée. La configuration géométrique des poussoirs et du basculeur peut être adaptée afin d'obtenir un comportement déterminé du carrossage d'une roue par rapport à l'autre. En effet, il peut par exemple être intéressant d'obtenir une variation différente du carrossage de chaque roue (intérieure et extérieure) dans une courbe. Un principe de ce mode de réalisation de l'invention est de combiner l'énergie transmise par le sol à chaque roue pour obtenir une variation cohérente du carrossage des deux roues de l'essieu indépendamment de la proportion d'énergie transmise à chaque roue isolément. Des moyens de blocage ou de contrôle actif peuvent également intervenir sur cette liaison. Par exemple, un dispositif de verrouillage peut empêcher les mouvements de carrossage en deçà d'un seuil déterminé d'accélération transversale afin de stabiliser le véhicule en ligne droite.

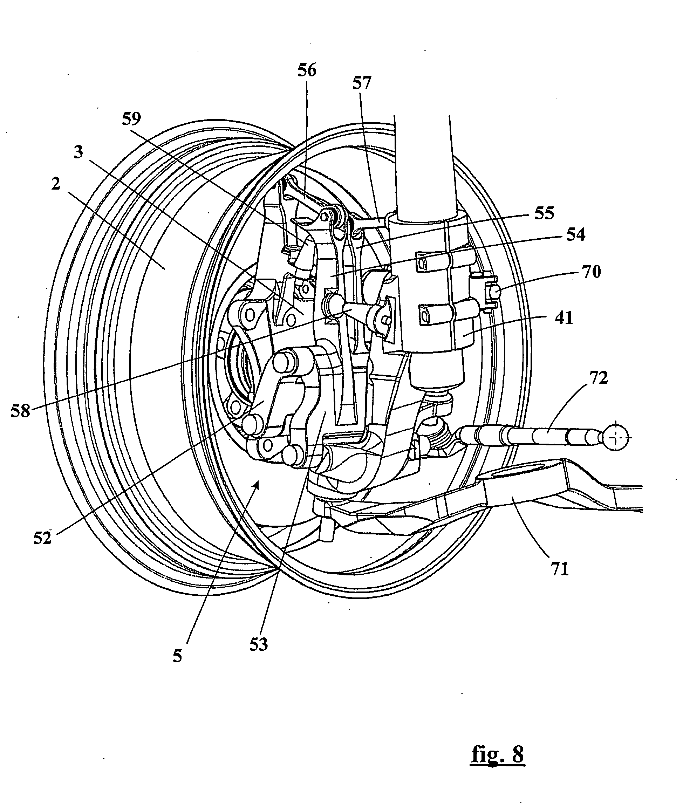

La figure 8 représente un mode de réalisation du système de suspension de l'invention incorporant les moyens de carrossage décrits en particulier à la figure 2. Il est basé dans cet exemple sur une suspension MacPherson connue en soi. La jambe de force 41 est guidée vis à vis de la caisse par son attache supérieure (non représentée), par un triangle inférieur 71 et par une biellette de direction 72. La partie inférieure de la jambe de force 41 joue ici le rôle du support intermédiaire (4) des figures précédentes. Selon l'invention, l'effort longitudinal et les couples d'auto-alignement et d'enroulement sont repris par la triple charnière 5. Les contraintes qui transitent par les leviers 54 et 55 sont réduites car elle concernent uniquement le couple de carrossage et une partie (réduite) des efforts transversaux. Si l'on compare l'architecture décrite ici à celle de la figure 2 de la demande internationale WO 01/72572, on comprend aisément l'apport de l'invention sur le plan de la rigidité.

Des butées de carrossage (58, 59) peuvent être mises en oeuvre afin de limiter la course des mouvements de carrossage. Sur cet exemple préféré, une butée de contre-carrossage 58 est disposée entre le levier intérieur 54 et la jambe de force 41 et une butée de carrossage 59 est disposée entre le levier intérieur 54 et le porte-roue 3. Les butées peuvent, outre leur rôle consistant à limiter les mouvements, également influencer utilement le comportement passif du système. En effet, leurs formes et leurs dimensions peuvent introduire des raideurs et un amortissement variables en fonction du débattement de carrossage. Ces butées sont de préférence réalisées en un matériau élastomère tel que du caoutchouc.

Les biellettes 56 et 57 peuvent comporter des moyens permettant de faire varier leurs longueurs afin par exemple de pouvoir modifier la définition cinématique décrite à la figure 3.

Un amortisseur de carrossage 70 (dont on aperçoit l'extrémité de la tige) peut par exemple être disposé entre la jambe de force 41 et le porte-roue 3 et constituer un moyen supplémentaire d'influencer le comportement passif du dispositif de support de l'invention. Alternativement, un élément actif comme un vérin (par exemple hydraulique, pneumatique ou électrique) peut permettre un contrôle actif du carrossage.

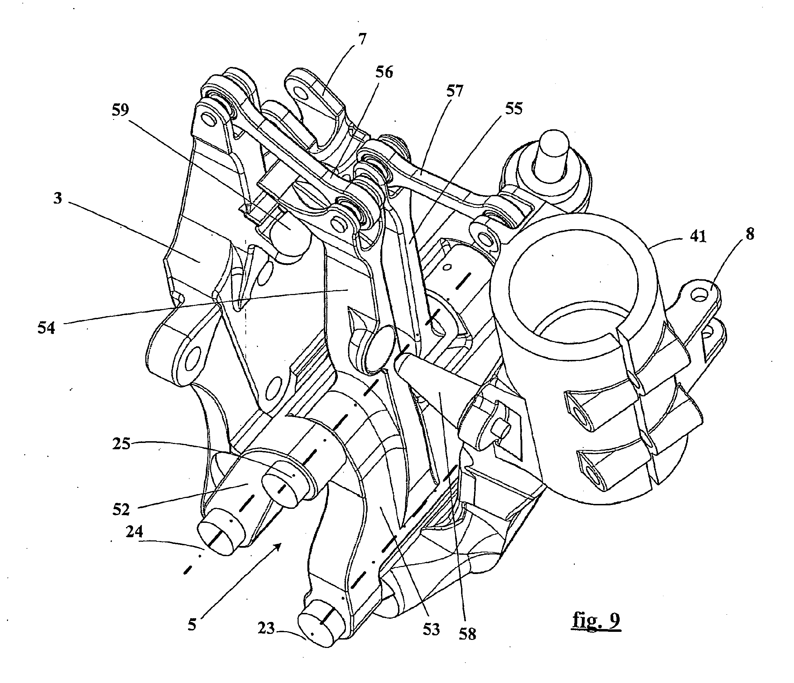

La figure 9 est une vue selon un angle différent du système de la figure 8. Sur cette vue, la roue, le triangle inférieur, la partie supérieure de la jambe de force, la biellette de direction et l'amortisseur de carrossage ont étés omis afin de faciliter la lecture. On peut ainsi mieux visualiser en particulier les axes 23, 24 et 25 de la triple charnière 5, les butées progressives 58 et 59 et les chapes 7 (sur le porte-roue) et 8 (sur la jambe de force) destinées à recevoir un amortisseur ou un actionneur de carrossage.

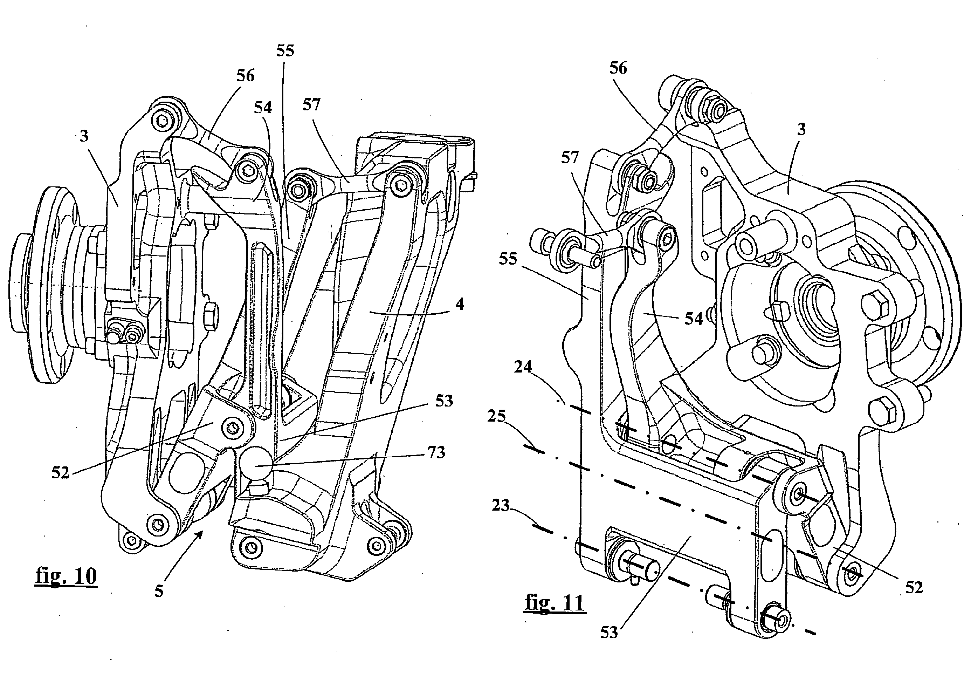

Les figures 10 et 11 sont deux vues d'un autre mode de réalisation du dispositif de support selon l'invention adapté plus particulièrement à la suspension d'un essieu moteur, de préférence pour l'essieu arrière d'un véhicule. La principale différence entre ce mode de réalisation et celui des figures 2, 8 et 9 est que le passage d'une transmission (elle-même non représentée ici) est rendu possible par une disposition particulière. Un évidement est prévu dans le support intermédiaire 4 (voir figure 10, non représenté sur la figure 11) ainsi que dans le porte-roue 3 (voir figure 11). Les leviers 54 et 55 sont également excentrés dans le même but (voir figure 11). Sur cet exemple, le support intermédiaire 4 est-destiné à être lié à la caisse du véhicule par une paire de triangles et une biellette de pince (connectée par l'intermédiaire de la rotule 73).

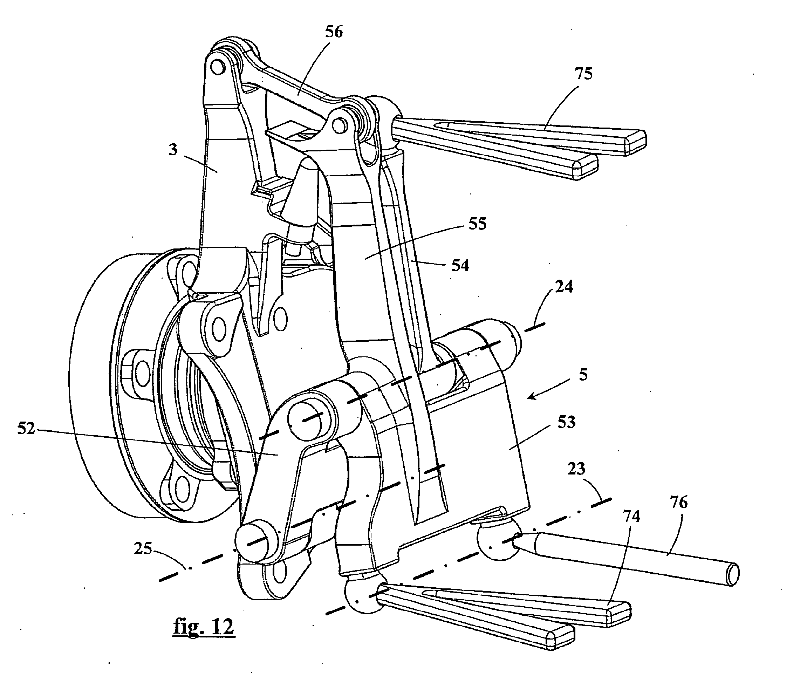

La figure 12 représente un autre mode de réalisation du dispositif de support selon l'invention.
La principale particularité de celui-ci est qu'il est relié directement aux bras et/ou triangles de suspension sans support intermédiaire ni biellette intérieure (voir références 4 et 57 sur la figure 10). Un avantage est donc un nombre réduit d'éléments et de liaisons. Cette simplification est rendue possible car on peut utiliser la mobilité verticale relative des bras ou triangles inférieur 74 et supérieur 75 pour compenser la variation de distance entre le point d'attache inférieur à la joue intérieure 53 et supérieur au levier 54 issu de la joue extérieure 52 du dispositif de support de l'invention. La définition de la position du centre instantané de rotation du mouvement de carrossage du porte-roue par rapport au triangle inférieur 74 peut se faire de la manière décrite à la figure 3 à condition de considérer que le triangle supérieur 75 remplace la biellette intérieure (référence 57 sur la figure 3). De préférence, le ressort de suspension (non représenté) prend appui sur le triangle inférieur 74.

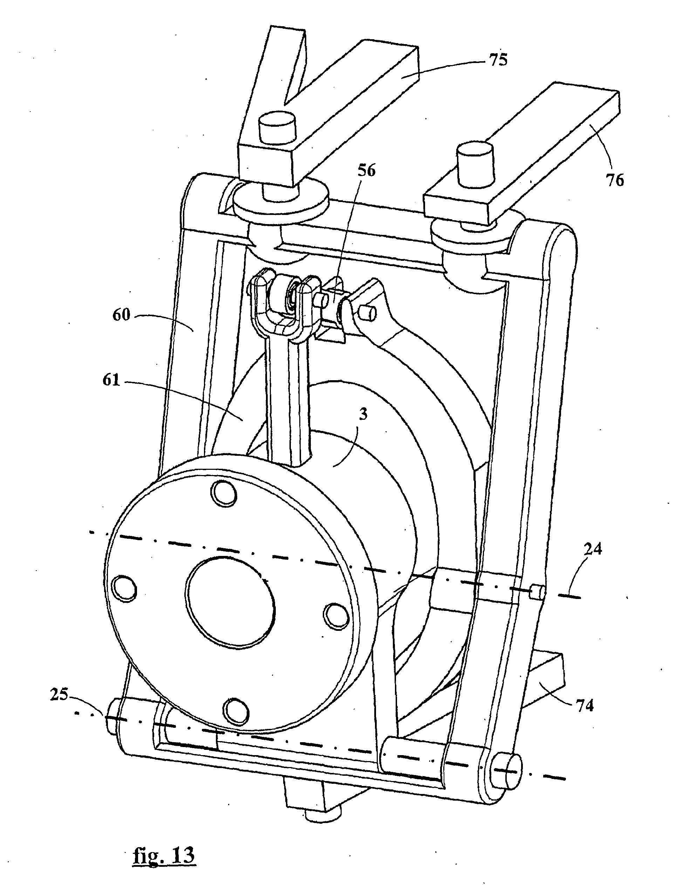

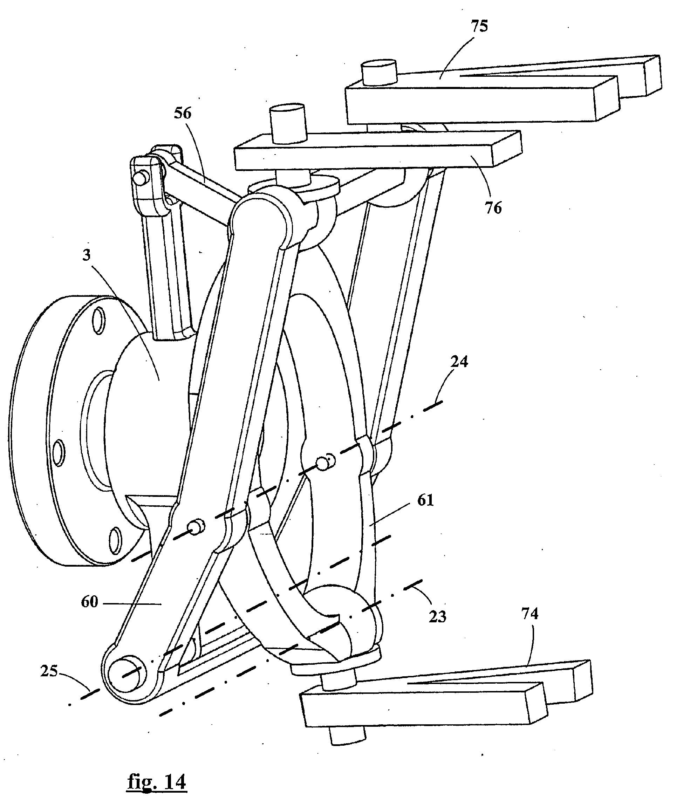

Les figures 13 et 14 représentent un mode de réalisation similaire à celui de la figure 12. Le principe cinématique est le même, celui d'une paire de ciseaux (60, 61) qui guide le mouvement de carrossage du porte-roue 3 par rapport aux éléments de suspension (74, 75 et 76). La définition de la position du centre instantané de rotation du mouvement de carrossage du porte-roue par rapport au triangle inférieur peut se faire de la manière décrite à la figure 3 lorsque l'on considère que le triangle supérieur 75 remplace la biellette intérieure (référence 57 sur la figure 3).

Cependant, dans ce mode de réalisation, les efforts d'enroulement ou d'auto-alignement ne sont pas repris exclusivement par la partie basse des ciseaux (c'est à dire par la triple charnière) car dans ce mode de réalisation la triple charnière comporte une liaison rotule en lieu et place de l'un de ses axes (l'axe intérieur 23 de la figure 11). Une part importante des efforts est donc transmise par le cadre extérieur 60 (qui constitue l'une des branches des ciseaux) directement de la partie basse du porte-roue 3 aux éléments supérieurs de suspension (75, 76). Sur le plan de la définition cinématique, l'axe intérieur (23) est l'axe parallèle à l'axe central (24) qui passe par la liaison rotule entre cadre intérieur 61 et le bras inférieur 74.

Le cadre intérieur 61 (qui constitue l'une des branches des ciseaux) relie le bras ou triangle inférieur (ici un triangle inférieur 74) à la partie haute du porte-roue 3 par l'intermédiaire d'une biellette 56 comme précédemment. Le bras 76 peut être une biellette de direction pour le cas d'un essieu directeur ou une biellette de pince dans le cas d'un essieu multi-bras non directeur. Sur un essieu non directeur, un trapèze peut également remplacer l'ensemble triangle (75) et bielle (76). Le passage d'un arbre de transmission est possible au centre du dispositif.

Un avantage de ce mode de réalisation est que les efforts de braquage (issus du couple d'auto-alignement) transitent par un seul axe (l'axe extérieur 25) au lieu de deux axes dans l'exemple de la figure 12 ou trois axes dans les exemples des figures 1 à 11.

On comprend également que pour permettre la fonction de liaison de la triple charnière, ses axes doivent être sensiblement parallèles entre eux et longitudinaux. Ce parallélisme peut ne pas être indispensable ou peut être plus ou moins précis. Si les axes ne sont pas tout à fait parallèles, le mouvement de carrossage sera couplé avec des mouvements de braquage et/ou d'enroulement. Un tel couplage peut être intéressant.

Les moyens de liaison en carrossage entre les roues d'un même essieu peuvent être des moyens mécaniques simples par exemple tels que ceux représentés à la figure 7. Cependant, des moyens différents, par exemple utilisant des vérins hydrauliques ou électriques dont les mouvements sont liés entre eux peuvent être utilisés et présenter des avantages par exemple en termes d'encombrement. Des moyens de liaison en carrossage réalisés sous la forme de vérins hydrauliques connectés entre eux peuvent par exemple assurer également la fonction d'amortissement de carrossage, de blocage ou de contrôle actif du carrossage décrite à la figure 8.

La présente invention permet un fonctionnement passif très intéressant. Elle est également intéressante pour des systèmes actifs utilisant un faible niveau d'énergie. Si l'on accepte au contraire de consacrer une énergie (par exemple électrique) importante au contrôle actif du carrossage, les caractéristiques essentielles de l'invention concernant la position du centre instantané de rotation ne sont pas forcément indispensables. Dans l'hypothèse d'un contrôle actif à grande consommation d'énergie, on pourra par exemple privilégier les impératifs d'encombrement et choisir des positions de centre instantané de rotation très au dessus du sol. Le document EP 1275534 décrit clairement ces choix.

La détermination des différentes positions du centre instantané de rotation et des valeurs des distances latérale et verticale peuvent se faire de manière graphique comme décrit plus haut à la figure 3 mais également par le calcul numérique comme cela est pratiqué couramment par les spécialistes de ce domaine technique des système de suspension pour véhicule automobile.

Afin de vérifier qu'un dispositif de support satisfait à un critère donné concernant la position de son centre instantané de rotation, on peut utiliser la méthode suivante:
1- déterminer la géométrie du système lorsque la suspension porte sa charge nominale statique, c'est à dire relever la position dans le plan de carrossage des points d'articulation des différents éléments, du plan de roue PR, du plan du sol S pour un pneumatique à sa pression d'utilisation normale.

2- Construire les courbes d'évolution du centre instantané de rotation et de la base de roue dans le plan de carrossage. Ceci peut être fait par exemple de manière théorique à partir de la configuration relevée à l'étape 1. Cela peut également être fait de manière expérimentale en imposant artificiellement la variation de carrossage au porte-roue afin de balayer le débattement de carrossage visée (par exemple de 0° à -3°) et en relevant au fur et à mesure les positions des éléments pour en déduire ensuite les positions correspondantes du centre instantané de rotation. Pour appliquer la méthode expérimentale, le support intermédiaire (ou le cas échéant le triangle inférieur) doit être maintenu immobile par rapport au sol S et au plan de référence PV par exemple en le fixant sur un banc de mesure (marbre). La roue ou le pneumatique peut alors être avantageusement démonté(e). Cette méthode expérimentale peut être limitée par la présence de butées ou autres contraintes constructives. Dans ce cas, on doit utiliser la méthode théorique au moins pour la partie non accessible du débattement concerné.

3- comparer graphiquement ou numériquement l'évolution ainsi définie avec les caractéristiques des revendications.

## Revendications

1. Dispositif de support (3, 5, 54, 55) destiné à lier une roue (2) à des éléments de suspension (4, 41, 74, 75, 76) d'un véhicule automobile, ledit dispositif de support comportant des moyens de carrossage conférant au porte-roue (3) un degré de liberté de carrossage par rapport aux dits éléments de suspension, les dits moyens de carrossage comprenant une triple charnière (5), ladite triple charnière comprenant trois axes sensiblement longitudinaux, ladite triple charnière étant liée d'une part au porte-roue (3) et d'autre part aux éléments de suspension, ladite triple charnière comprenant deux joues (52, 53) et deux leviers (54, 55), chacun des leviers étant respectivement solidaire de l'une des deux joues, les leviers étant liés d'une part au porte-roue (3) et d'autre part aux éléments de suspension, le mouvement de carrossage du porte-roue s'effectuant autour d'un centre instantané de rotation (CIR r/s), une distance latérale "dl" séparant la position transversale du centre instantané de rotation (CIR r/s) de la position transversale de la base de roue (BR), ledit dispositif étant configuré en outre de manière à ce que ladite distance (dl) demeure inférieure à 40 mm au cours d'un débattement de carrossage (α) de 0° à -3°.

2. Dispositif de support selon la revendication 1 configuré en outre de manière à ce que ladite distance (dl) demeure inférieure à 40 mm au cours d'un débattement de carrossage de 0° à -4°, de préférence -5°, de préférence -6°, de préférence -7°, de préférence -8°, de préférence sur l'ensemble du débattement de carrossage négatif utile.

3. Dispositif de support selon l'une des revendications précédentes configuré en outre de manière à ce que ladite distance (dl) demeure inférieure à 20 mm, de préférence 10 mm.

4. Dispositif de support selon l'une des revendications précédentes configuré en outre de manière à ce que ladite distance (dl) demeure inférieure à 40 mm, de préférence 20 mm, de préférence 10 mm au cours d'un débattement de carrossage de 0° à +1°, de préférence +2°, de préférence +3°, de préférence +4°, de préférence +5°, de préférence +6°, de préférence +7°, de préférence +8°, de préférence sur l'ensemble du débattement de carrossage positif utile.

5. Dispositif de support selon l'une des revendications précédentes, le centre instantané de rotation (CIR r/s) étant situé sous le sol (S) et à une distance verticale (Z_{CIR}) du sol, ledit dispositif étant configuré en outre de manière à ce que la distance verticale correspondant au débattement de carrossage positif maximal (Z_{MAX}) soit supérieure à la distance verticale correspondant à un carrossage nul (Z₀).

6. Dispositif de support selon la revendication 5, ledit dispositif étant configuré en outre de manière à ce que la distance verticale correspondant au débattement de carrossage positif maximal (Z_{MAX}) soit supérieure à 1.5 fois la distance verticale correspondant à un carrossage nul (Z₀), de préférence 2.5 fois.

7. Dispositif de support selon l'une des revendications précédentes comprenant en outre un amortisseur de carrossage (70) agissant entre le porte-roue (3) et le support intermédiaire (4; 41).

8. Dispositif de suspension d'un essieu comprenant pour chacune des deux roues dudit essieu un dispositif de support selon l'une des revendications précédentes.

9. Dispositif de suspension selon la revendication 8 comprenant en outre des moyens de liaison en carrossage (10, 11, 12; 70) permettant de lier le mouvement de carrossage des deux roues.

10. Dispositif de suspension selon la revendication 9 dans lequel les moyens de liaison en carrossage utilisent une liaison entre deux vérins (70) agissant entre le porte-roue (3) et le support intermédiaire (4; 41) de chaque roue de l'essieu.

11. Dispositif de suspension selon la revendication 9 dans lequel les moyens de liaison en carrossage comprennent des liens mécaniques (10, 11, 12) agissant entre les portes-roues (3) de chaque roue de l'essiéu.

12. Dispositif de suspension selon la revendication 8 comprenant en outre au moins un bras supérieur (75) et un bras inférieur (74) et dans lequel le bras inférieur est relié directement à la joue intérieure (53) de la triple charnière et le bras supérieur est relié directement au levier (54) solidaire de la joue extérieure (52) de la triple charnière (5).

## Claims

1. Support system (3, 5, 54, 55) designed to connect a wheel (2) to suspension elements (4, 41, 74, 75, 76) of an automobile, the said support system comprising cambering means that confer upon the wheel carrier (3) a degree of camber freedom relative to the said suspension elements, the said cambering means comprising a triple hinge (5), the said triple hinge comprising three essentially longitudinal axes, the said triple hinge comprising two flanges (52, 53) and two levers (54, 55), each of the levers being respectively attached to one of the two flanges, the levers being connected on the one hand to the wheel carrier (3) and on the other hand to the suspension elements, the camber movement of the wheel carrier taking place around an instantaneous centre of rotation (CIR r/s), a lateral distance "dl" separating the transverse position of the instantaneous centre of rotation (CIR r/s) from the transverse position of the wheel base (BR), the said system also being configured such that the said distance (dl) remains smaller than 40 mm during a camber deflection (α) of 0° to -3°.

2. Support system according to Claim 1, also configured such that the said distance (dl) remains smaller than 40 mm during a camber deflection of 0° to -4°, preferably -5°. preferably -6°, preferably -7°, preferably -8° and preferably over the entire useful negative camber deflection.

3. Support system according to either of the preceding claims, also configured such that the said distance (dl) remains smaller than 20 mm, preferably 10 mm.

4. Support system according to any of the preceding claims, also configured such that the said distance (dl) remains smaller than 40 mm, preferably 20 mm and preferably 10 mm during a camber deflection of 0° to +1°, preferably +2°, preferably +3°, preferably +4°, preferably +5°, preferably +6°, preferably +7°, preferably +8°, and preferably over the entire useful positive camber deflection.

5. Support system according to any of the preceding claims, the instantaneous centre of rotation (CIR r/s) being located below ground level (S) and a vertical distance (Z_{CIR}) from the ground, the said system also being configured such that the vertical distance (Z_{MAX}) corresponding to the maximum positive camber deflection is larger than the vertical distance (Z₀) corresponding to zero camber.

6. Support system according to Claim 5, the said system also being configured such that the vertical distance (Z_{MAX}) corresponding to the maximum positive camber is larger than 1.5 times and preferably 2.5 times the vertical distance (Z₀) corresponding to zero camber.

7. Support system according to any of the preceding claims, also comprising a camber damper (70) which acts between the wheel carrier (3) and the intermediate support (4; 41).

8. Suspension system for an axle, comprising for each of the axle's two wheels a support system according to any of the preceding claims.

9. Suspension system according to Claim 8, also comprising camber connection means (10, 11, 12; 70) that enable the camber movements of the two wheels to be linked.

10. Suspension system according to Claim 9, in which the camber connection means use a link between two jacks (70) that act between the wheel carrier (3) and the intermediate support (4; 41) of each wheel on the axle.

11. Suspension system according to Claim 9, in which the camber connection means comprise mechanical links (10, 11, 12) which act between the wheel carriers (3) of each wheel on the axle.

12. Suspension system according to Claim 8, also comprising at least one upper arm (75) and one lower arm (74) and in which the lower arm is connected directly to the inner flange (53) of the triple hinge and the upper arm is connected directly to the lever (54) attached to the outer flange (52) of the triple hinge (5).

## Patentansprüche

1. Tragvorrichtung (3, 5, 54, 55), die dazu bestimmt ist, ein Rad (2) mit Aufhängungselementen (4, 41, 74, 75, 76) eines Kraftfahrzeugs zu verbinden, wobei die Tragvorrichtung Radsturzeinrichtungen aufweist, die dem Radhalter (3) einen Radsturz-Freiheitsgrad bezüglich der Aufhängungselemente verleihen, wobei die Radsturzeinrichtungen ein Dreifachscharnier (5) enthalten, wobei das Dreifachscharnier drei im Wesentlichen längs verlaufende Achsen hat, wobei das Dreifachscharnier einerseits mit dem Radhalter (3) und andererseits mit den Aufhängungselementen verbunden ist, wobei das Dreifachscharnier zwei Wangen (52, 53) und zwei Hebel (54, 55) enthält, wobei jeder der Hebel mit einer der beiden Wangen fest verbunden ist, wobei die Hebel einerseits mit dem Radhalter (3) und andererseits mit den Aufhängungselementen verbunden sind, wobei die Radsturzbewegung des Radhalters um einen Momentandrehpunkt (CIR r/s) erfolgt, wobei ein seitlicher Abstand "dl" die Querstellung des Momentandrehpunkts (CIR r/s) von der Querstellung der Radbasis (BR) trennt, wobei die Vorrichtung außerdem so konfiguriert ist, dass der Abstand (dl) während eines Radsturz-Federwegs (α) von 0° bis -3° geringer als 40 mm bleibt.

2. Tragvorrichtung nach Anspruch 1, die außerdem so konfiguriert ist, dass der Abstand (dl) während eines Radsturz-Federwegs von 0° bis -4°, vorzugsweise -5°, vorzugsweise -6°, vorzugsweise -7°, vorzugsweise -8°, vorzugsweise über die Gesamtheit des nützlichen negativen Radsturz-Federwegs, unter 40 mm bleibt.

3. Tragvorrichtung nach einem der vorhergehenden Ansprüche, die außerdem so konfiguriert ist, dass der Abstand (dl) unter 20 mm, vorzugsweise unter 10 mm bleibt.

4. Tragvorrichtung nach einem der vorhergehenden Ansprüche, die außerdem so konfiguriert ist, dass der Abstand (dl) während eines Radsturz-Federwegs von 0° bis +1°, vorzugsweise +2°, vorzugsweise +3°, vorzugsweise +4°, vorzugsweise +5°, vorzugsweise +6°, vorzugsweise +7°, vorzugsweise +8°, vorzugsweise über die Gesamtheit des nützlichen positiven Radsturz-Federwegs, unter 40 mm, vorzugsweise 20 mm, vorzugsweise 10 mm bleibt.

5. Tragvorrichtung nach einem der vorhergehenden Ansprüche, wobei der Momentandrehpunkt (CIR r/s) sich unter dem Boden (S) und in einem senkrechten Abstand (Z_{CIR}) zum Boden befindet, wobei die Vorrichtung außerdem so konfiguriert ist, dass der senkrechte Abstand entsprechend dem maximalen positiven Radsturz-Federweg (Z_{MAX}) größer als der senkrechte Abstand entsprechend einem Radsturz Null (Z₀) ist.

6. Tragvorrichtung nach Anspruch 5, wobei die Vorrichtung außerdem so konfiguriert ist, dass der senkrechte Abstand entsprechend dem maximalen positiven Radsturz-Federweg (Z_{MAX}) höher als 1,5 Mal der senkrechte Abstand entsprechend einem Radsturz Null (Z₀) ist, vorzugsweise 2,5 Mal.

7. Tragvorrichtung nach einem der vorhergehenden Ansprüche, die außerdem einen Radsturzdämpfer (70) enthält, der zwischen dem Radhalter (3) und dem Zwischenträger (4; 41) wirkt.

8. Aufhängungsvorrichtung einer Achse, die für jedes der zwei Räder der Achse eine Tragvorrichtung nach einem der vorhergehenden Ansprüche enthält.

9. Aufhängungsvorrichtung nach Anspruch 8, die außerdem Radsturz-Verbindungseinrichtungen (10, 11, 12; 70) enthält, die es ermöglichen, die Radsturzbewegung der zwei Räder zu verbinden.

10. Aufhängungsvorrichtung nach Anspruch 9, bei der die Radsturz-Verbindungseinrichtungen eine Verbindung zwischen zwei Arbeitszylindern (70) nutzen, die zwischen dem Radhalter (3) und dem Zwischenträger (4; 41) jedes Rads der Achse wirken.

11. Aufhängungsvorrichtung nach Anspruch 9, bei der die Radsturz-Verbindungseinrichtungen mechanische Verbindungen (10, 11, 12) enthalten, die zwischen den Radhaltern (3) jedes Rads der Achse wirken.

12. Aufhängungsvorrichtung nach Anspruch 8, die außerdem mindestens einen oberen Arm (75) und einen unteren Arm (74) enthält, und bei der der untere Arm direkt mit der inneren Wange (53) des Dreifachscharniers und der obere Arm direkt mit dem Hebel (54) verbunden ist, der fest mit der äußeren Wange (52) des Dreifachscharniers (5) verbunden ist.
